(19) **Europäisches Patentamt**
**European Patent Office**
**Office européen des brevets**

(11) **EP 2 776 813 B1**

(12) **EUROPEAN PATENT SPECIFICATION**

(45) Date of publication and mention
of the grant of the patent:
**17.01.2018 Bulletin 2018/03**

(51) Int Cl.:
***G01N 21/64*** *(2006.01)*

(21) Application number: **12783530.4**

(86) International application number:
**PCT/EP2012/004640**

(22) Date of filing: **07.11.2012**

(87) International publication number:
**WO 2013/068113 (16.05.2013 Gazette 2013/20)**

(54) **A METHOD, SYSTEM AND COMPUTER PROGRAM PRODUCT FOR DETERMINING THE MOBILITY OF FLUORESCENT PARTICLES**

VERFAHREN, SYSTEM UND COMPUTERPROGRAMMPRODUKT ZUR BESTIMMUNG DER MOBILITÄT FLUORESZENTER PARTIKEL

PROCÉDÉ, SYSTÈME ET PRODUIT DE PROGRAMME INFORMATIQUE POUR DÉTERMINER LA MOBILITÉ DE PARTICULES FLUORESCENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2011 EP 11188202**

(43) Date of publication of application:
**17.09.2014 Bulletin 2014/38**

(73) Proprietor: **Deutsches Krebsforschungszentrum, Stiftung des öffentlichen Rechts**
**69120 Heidelberg (DE)**

(72) Inventors:
• **ERDEL, Fabian**
  **68799 Reilingen (DE)**
• **RIPPE, Karsten**
  **69123 Heidelberg (DE)**

(74) Representative: **Lucke, Andreas**
**Boehmert & Boehmert**
**Anwaltspartnerschaft mbB**
**Pettenkoferstrasse 22**
**80336 München (DE)**

(56) References cited:
• **MICHELLE A. DIGMAN ET AL: "Fluctuation Correlation Spectroscopy with a Laser-Scanning Microscope: Exploiting the Hidden Time Structure", BIOPHYSICAL JOURNAL, vol. 88, no. 5, 1 May 2005 (2005-05-01), pages 33-36, XP055022730, ISSN: 0006-3495, DOI: 10.1529/biophysj.105.061788**
• **FABIAN ERDEL ET AL: "Dissecting chromatin interactions in living cells from protein mobility maps", CHROMOSOME RESEARCH, KLUWER ACADEMIC PUBLISHERS, DO, vol. 19, no. 1, 17 September 2010 (2010-09-17), pages 99-115, XP019882785, ISSN: 1573-6849, DOI: 10.1007/S10577-010-9155-6**
• **BENEDICT HEBERT ET AL: "Spatiotemporal Image Correlation Spectroscopy (STICS) Theory, Verification, and Application to Protein Velocity Mapping in Living CHO Cells", BIOPHYSICAL JOURNAL, vol. 88, no. 5, 1 May 2005 (2005-05-01), pages 3601-3614, XP055022727, ISSN: 0006-3495, DOI: 10.1529/biophysj.104.054874**
• **KATHARINA P. MÜLLER ET AL: "Multiscale Analysis of Dynamics and Interactions of Heterochromatin Protein 1 by Fluorescence Fluctuation Microscopy", BIOPHYSICAL JOURNAL, vol. 97, no. 11, 2 December 2009 (2009-12-02), pages 2876-2885, XP055022746, ISSN: 0006-3495, DOI: 10.1016/j.bpj.2009.08.057**

**(Cont. next page)**

- GERRIT HEUVELMAN ET AL: "Analysis of protein mobilities and interactions in living cells by multifocal fluorescence fluctuation microscopy", EUROPEAN BIOPHYSICS JOURNAL ; WITH BIOPHYSICS LETTERS, SPRINGER, BERLIN, DE, vol. 38, no. 6, 19 June 2009 (2009-06-19), pages 813-828, XP019705346, ISSN: 1432-1017

- DIGMAN M A ET AL: "Measuring Fast Dynamics in Solutions and Cells with a Laser Scanning Microscope", BIOPHYSICAL JOURNAL, BIOPHYSICAL SOCIETY, US, vol. 89, no. 2, 1 August 2005 (2005-08-01) , pages 1317-1327, XP002557976, ISSN: 0006-3495, DOI: 10.1529/BIOPHYSJ.105.062836

## Description

FIELD OF THE INVENTION

The present invention relates to the field of fluorescence microscopy. In particular, the present invention relates to a method and a system of determining the mobility of fluorescent particles based on scanning laser microscopy data as well as a corresponding computer program product.

BACKGROUND OF THE INVENTION

Fluorescence microscopy using fluorescent particles or particles tagged with a fluorescence marker is a well-established technology. In particular, fluorescence microscopy using fluorescently tagged proteins has proven to be a powerful tool for non-invasively studying living cells. In addition to fluorescence imaging techniques that determine the localization of cellular structures, a number of so-called fluctuation microscopy methods have been developed to investigate the mobility of cellular structures and their interactions. An overview of fluorescence fluctuation microscopy methods is given in Erdel F., Müller-Ott, K., Baum, M., Wachsmuth, M. & Rippe, K. Dissecting chromatin interactions in living cells from protein mobility maps. Chromosome Res.19, 99-115 (2011). Fluorescence fluctuation microscopy allows for retrieving valuable mechanistic information on the dynamic nature of cellular components, such as the shuttling of factors between different compartments or the search processes used by proteins to identify their target sites, to name but two.

The most prominent approaches in fluorescence fluctuation microscopy fall into two classes. The first is referred to as the "fluorescence recovery after a photobleaching (FRAP)" method. Simply speaking, in FRAP a portion of the sample is bleached in a first scan process of a scanning laser microscope. Then, in subsequent so-called "post bleach" scanning processes, fluorescence images of the sample are recorded. In each scan process, individual locations of a probe are scanned, which correspond to pixels of a pixel-wise scan to thereby record a pixelized image of the fluorescence intensity. Each individual scan process usually corresponds to one image frame in which each pixel of the region of interest is scanned at least once. By repeating the scan process, consecutive image frames can be recorded. In FRAP, the recovery of the fluorescence after a photobleaching event between consecutive image frames, i.e. as the function of time, is analyzed, thereby allowing to assess the mobility of the particles. For more details, reference is made to the above-referenced publication to *Erdel et al.* and further references given therein.

However, since conducting the scan for a single frame takes typically around 100 ms in ordinary scanning fluorescence microscopes, the time-resolution of the FRAP method is limited. Accordingly, while FRAP is very successful for studying comparatively slow particle diffusion processes, the measurement of fast diffusion processes is not possible.

The second well-established class of fluorescence fluctuation microscopy methods is the so-called "fluorescence correlation spectroscopy (FCS)". FCS relies on the detection of fluorescence intensity fluctuations on a $\mu$s-scale generated by molecules moving in and out of an observation volume. While FCS is well suited for studying fast processes, such as the measurement of proteins with a relative high mobility, it cannot be used to measure particle movements taking place on a longer time scale of say a second or more, which is due to bleaching of the fluorophore and loss of the signal.

While both, FRAP and FCS work well in their corresponding time regimes, for many applications the information obtained by one method alone will not be sufficient to get the mobility information needed, as proteins often exhibit heterogeneous interaction behaviour, such as transient and strong binding to different classes of binding sites. Accordingly, attempts have been made to combine FRAP and correlation methods in the analysis of the same sample. However, since FRAP and FCS experiments are carried out on different length scales (∼ 0.3 $\mu$m in case of FCS, more than 1 $\mu$m in case of FRAP), scale-dependent phenomena such us anomalous diffusion or caging effects caused by the heterogeneous and crowded environment of the cell nucleus or cytoplasm will affect FRAP and FCS experiments differently. This makes the comparison between the two methods difficult.

Furthermore, the cross-validation of FRAP and FCS experiments is limited to the time regime that is accessible to both methods. The available repertoire of measuring intracellular protein mobility in a spatially resolved manner on multiple length and time scales has been extended by methods such as "spatiotemporal image correlation spectroscopy" (STICS) or raster image correlation spectroscopy (RICS), see for example Hebert, B., Costantino, S. & Wiseman, P. W. Spatiotemporal image correlation spectroscopy (STICS) theory, versification, and application to protein velocity mapping in living CHO cells. Biophys. J.88, 3601-3614 (2005), and Digman, M.A. et al. Fluctuation correlation spectroscopy with a laser-scanning microscope: exploiting the hidden time structure. Biophys. J.88, L33-36 (2005).

In these methods, the intensity fluctuations in different image pixels are analyzed, and they work best with very sensitive detectors at low concentrations of fluorescent particles. Like FCS, they provide, however, no information about particles immobile on the time scale of the method. Since the presence of immobile particles is an important aspect of intracellular protein mobility measurements and due to the relatively simple experimental setup, most of the recent studies of cellular dynamics have nevertheless relied on FRAP.

SUMMARY OF THE INVENTION

Accordingly, the problem underlying the invention is to provide a method and means of determining the mobility of fluorescent particles or particles tagged with a fluorescent marker that would allow to consistently determine the mobility on a wide range of time scales.

This problem is solved by a method according to claim 1, a computer program product of claim 11 and a system of claim 13. Preferable embodiments are defined in the dependent claims.

According to the invention, the mobility of fluorescent particles or particles tagged with a fluorescent marker is based on at least one fluorescence image, said at least one fluorescent image being generated in a process comprising

- a fluorescence properties changing step of locally irradiating the sample such as to carry out a local light-induced change of the fluorescence properties of the fluorescent particles, said light-induced change comprising one of the following:

  • a photobleaching,
  • a light-induced activation of fluorescence in a fraction of particles that are initially non-fluorescent,
  • a light-induced switching of a fraction of particles between a fluorescent and a non-fluorescent state, or
  • a light-induced switching of a fraction of particles between fluorescent states that are different with respect to their fluorescence emission wavelength, and

- a fluorescence image recording step carried out after or interleaved with said fluorescence properties changing step, in which said fluorescence image is recorded, wherein both of said fluorescence properties changing step and said fluorescence image recording step are carried out in a pixel-wise scanning process using a laser scanning microscope according to a predetermined scan pattern, said scanning process corresponding to one image frame, and wherein the particle mobility is assessed accounting for translocations of particles with changed fluorescence properties that occurred during said scanning process.

As an ordinary FRAP, the mobility is assessed based on the translocation of particles which have been subjected to a light-induced change of fluorescence properties. In ordinary FRAP, the "light-induced change of fluorescence properties" is photobleaching, and in the following discussion, for illustration purposes reference is always made to photobleaching as well. It is, however, to be understood that anything described herein with specific reference to photobleaching may likewise be carried out with different types of light-induced changes of fluorescence properties as defined above, without further mention.

Further, in the following explanation of the invention, it is assumed that both, the fluorescence properties changing step and the fluorescence image recording step are carried out in a pixel-wise scanning process using a laser scanning microscope, since this is currently the usual way to carry out photobleaching and fluorescence image recording in FRAP experiments.

Finally, it is emphasized that assessing the particle mobility while accounting for translocations of particles also includes the important case that a lack of translocation of particles is observed, i.e. a lack of or a reduced mobility.

Note that the scanning process in which the pixelized fluorescence image is obtained could be the same as the "bleach image" that is obtained when carrying out the bleach scan of ordinary FRAP. However, in ordinary FRAP, this bleach image merely serves to define "zero time", while the time-dependent fluorescence recovery is in fact analyzed based on consecutive post-bleach images. That is to say, in ordinary FRAP, each image or image frame is regarded as a "snapshot" of the sample, and the time evolution of the fluorescence recovery between consecutive snapshots is analyzed to assess the particle mobility.

However, in a laser scanning microscope, the idea of a "snapshot" image frame is not entirely correct, since the individual pixel locations are not scanned simultaneously. Instead, even during the initial bleach frame, bleached particles that have been bleached already will move or translocate within the observed sample area. Indeed, a particle that is bleached at a pixel location that is scanned earlier in the scan process may actually translocate to a pixel location that is scanned later in the same scan process, where it can already be detected. This means that even the bleach image frame itself, if analyzed properly, yields information about the mobility of particles. Herein, the proper analysis is an analysis that accounts for the inherent time structure of the scan process itself. Note that this information is entirely disregarded in ordinary FRAP, where the smallest time unit is the time difference between consecutive scanning processes or image frames.

The inventors have discovered that by systematically accounting for the translocations of bleached particles that occurred during the aforementioned scanning process, or in other words, the "bleach image", the particle mobility can be determined with great precision. In particular, by accounting for the particle translocations on a "sub-frame level", the mobility of particles with high mobility can be determined, which would not be possible with ordinary FRAP. What is more, the inventors found out that surprisingly, even comparatively low mobilities can be accurately determined based on a "bleach image" only. The accuracy of the result can then be further improved by accounting for consecutive image frames, in a similar way as in ordinary FRAP, although still accounting for the sub-frame time structure inherent to the scanning process. However, a very attractive and surprising result is that in many cases, recording the bleach image frame will be sufficient, thereby dramatically reducing the measurement time as compared to ordinary FRAP and increasing the throughput of mobility measurements with the microscope used.

Preferably, the fluorescence image recording step is a step in which a pixelized fluorescence image is obtained in a pixel-wise scanning process, wherein a pixel in the fluorescence image represents the fluorescence of a volume element of the scanned sample that is illuminated by the laser beam of said laser scanning microscope and wherein individual locations of the scanned sample correspond to pixels of said pixel-wise scan.

As mentioned before, the aforementioned "scanning process" corresponds to one image frame, in particular an image frame in which each pixel of a region of interest is scanned exactly once or at least once. This means that the particle mobility is assessed based on translocations of bleached particles during acquisition of a single image frame. In addition, the scanning process may be characterized in that the fluorescence image acquisition of some pixels is interleaved in time with the photobleaching of other pixels within the same scanning process.

Preferably, the particle mobility is assessed based on an analysis of the time-evolution of the fluorescence intensity profile accounting for time delays between scanning of individual pixels or groups of pixels within the same scanning process. Accounting for time delays between individual pixels can be thought of as assigning a time stamp to each pixel according to the point of time within the scanning process at which it is actually addressed. However, in practical applications, a time resolution corresponding to individual pixel timings need not be necessary, instead it may be sufficient that groups of adjacent pixels may be assigned the same time stamp. For example, in some embodiments, line segments or entire lines within the scan process may be assigned the same time stamp for practical purposes.

Preferably, the analysis of the time resolution of the fluorescence intensity profile is based on one or more of the following:

- time correlations between fluorescence intensities of pixels within the same scan, in particular within the bleach frame,
- time correlations between fluorescence intensities of pixels of different images or image frames, thereby at least approximately accounting for the time at which the respective pixel was scanned within the corresponding image or image frame, wherein the different images may in particular be images of the same part of the sample taken at different times or images taken from spatially separated locations, in particular different focusing planes within the same sample.

Accordingly, while the analysis accounts for time delays between scanning of individual pixels or groups of pixels within the same scanning process, these time delays may, and in the preferred embodiment will also be accounted for when analyzing the particle translocations between different image frames of a series of image frames. Even in this case, it is considered that different pixels within a same scanning process have different time stamps or different mutual delays. This will become more apparent from the description of a specific embodiment below. Also, if different image frames are analysed to assess the mobility of the fluorescent particles, these images need not correspond to the same part of the sample, but can also be images taken from spatially separated locations.

For example, it is common to take images in different focusing planes, also referred to as "optical sections" in the art, that are spaced from each other in depth direction of the sample. In some embodiments of the invention, the mobility can be assessed based on particle translocations that become apparent from correlating such image frames taken for spatially separated locations. In this instance too, however, time delays between scanning of individual pixels or groups of pixels within the same scanning process is accounted for.

In a preferred embodiment, assessing the particle mobility comprises one or more of the following:

- determining one or more particle diffusion coefficients,
- determining one or more kinetic rate constants for the binding or dissociation of the particle,
- a quantitative assessment of the fraction of particles that is immobilized on a time scale of the measurement, and
- determining spatial constraints affecting particle mobility.

As will be apparent from the description of specific embodiments below, by accounting for the time evolution of intensities on a pixel-by-pixel basis instead of a frame-by-frame analysis, it is possible to in fact account for more specific types of particle movement, including not only ordinary particle diffusion, but also particle binding interactions and spatial constraints. In particular, the method allows accounting for spatial constraints by an anomaly exponent of a diffusion process or by using an arbitrary probability distribution for the translocation steps, such as in a confined diffusion model.

In a preferred embodiment, the assessment of particle mobility is based on a comparison of pixel fluorescence intensity with model data, said model data accounting for the inherent time structure of the scanning process with respect to time delays between scanning of individual pixels or groups of pixels within the same scanning process.

Herein, the model data can be empirical model data or data obtained by simulation or model calculations. In particular, as will be explained in more detail below, in one embodiment a library of model data is calculated in advance based on certain assumptions about diffusion coefficients, binding rates, immobilization, spatial constraints or the like. Then, the measured pixelized image can be readily compared with the model data from the library for consistency to thereby assess the underlying particle mobilities.

Preferably, the assessment of mobility is based on a model of a particle translocation process, said model accounting for the probability that a particle bleached at a first point in time at a first pixel location has moved to a second pixel location at a second point in time. This probability, also referred to "probability propagator" below, allows to very precisely describe the desired properties of the mobility, such as diffusion coefficients, binding rate constants, or spatial constraints, and allows for introducing these properties into the model.

Herein, the time difference between the first and second points in time correspond to or account for the time delay between scanning the first and second pixels in the scanning process. In other words, the model in each case reflects the inherent time structure of the scanning process. If the analysis is based on the "bleached image" only, the time difference between the first and second points in time corresponds to the time delay between scanning the first and second pixels in the bleach image scanning process. However, the method of the invention naturally also allows to account for a plurality of consecutive ordinary, i.e. "post-bleach" image frames, in which the time delay between the bleaching and the detection of the bleached particle at a second location may amount to several frame times plus the time delay between scanning the first and second pixels in the scanning process. In this case, the time difference between the first and second points in time do not "correspond to" but still "account for" this time delay between scanning the first and second pixels in the scanning process. Note again that in ordinary FRAP, time delays within a single scan are neglected altogether, as only time delays between consecutive images, i.e. consecutive scanning processes are generally considered.

In a preferred embodiment, the translocation process is a reaction-diffusion process and the movement of the particle between the first and second locations is a diffusion movement that may be interrupted by binding events.

As mentioned before, the method of the invention does not necessarily require a different mode of pixelized fluorescence image acquisition than in ordinary FRAP. Instead, the method of the invention could be carried out based on an ordinary bleach image that would be recorded in an ordinary FRAP process but currently would not be utilized for determining the particle mobility (other than defining a "zero time"). Accordingly, one embodiment of the invention is a computer program product that when executed on a processor carries out a method as described above, based on a pixelized fluorescence image that is obtained with an ordinary prior art scanning laser microscope. The invention also relates to a system for determining the mobility of fluorescent particles. In particular, such system can be formed by a computer or work station under program control of the aforementioned computer program product.

Note that, currently FRAP experiments are carried out using a confocal laser scanning microscope, wherein the photobleaching, or more generally the "light-induced change of the fluorescence properties" is carried out with the same microscope modality that is also used to excite fluorescence for the fluorescence image recording scan, only with a higher intensity. Since the method of the invention is easily compatible with standard FRAP apparatuses, it is believed that the currently most important applications of the invention will relate to fluorescence images in which both, the fluorescence property changing step and the fluorescence image recording step are carried out in a pixel-wise scanning process using a laser scanning microscope. However, it is emphasized that the method of the invention would be as well applicable if only the photobleaching (or other light-induced fluorescence changing process) would be carried out in a pixel-wise scan, while the fluorescence image is recorded in parallel without having to carry out a scan. For example, the image could be acquired with a conventional wide field fluorescence microscope, or a microscope, in which the fluorescence image is obtained by exciting a plane, i. e. a so-called "light sheet", perpendicular to the optical axis. In this case too, the analysis of the mobility will be greatly improved if the translocations of bleached particles during the bleach scan process are accounted for, where again "bleach" is just an example of the light-induced change of fluorescence properties. This alternative embodiment can be easily incorporated in the mathematical description and the model that is explained below, where the time delays between scanning pixels when recording an image frame are then set to zero. In other words, this only simplifies the general formalism presented below, as it is in fact included in the general model as a special case.

The same is true for the complementary situation where the bleach process is carried out in a simultaneous irradiation of the bleach area instead of a scan process, and only the fluorescence image recording involves a scan process. Again, the principles of the invention can be readily applied to this situation too.

SHORT DESCRIPTION OF THE FIGURES

Fig. 1     is a schematic representation of the pixel-wise time evolution of the fluorescence profile during an individual scan process and a consecutive scan process.

Fig. 2(a)     shows the time evolution of intensity profiles for particles with different diffusion coefficients based on model calculations.

Fig. 2(b)     shows FRAP recovery curves based on the model calculation of Fig. 2(a).

Fig. 3     shows fluorescence images recorded during a bleach scan for different scan frequencies and particles.

Fig. 4     shows corresponding intensity profiles calculated according to theoretical description of the model of the invention.

Fig. 5     shows a comparison of fluorescence intensity images and corresponding model data that best fitted the experimental data.

Fig. 6     shows the result of the best fit according to the sum of squared residuals (SSR).

Fig. 7     shows experimental FRAP data for Snf2H-GFP and RFP fluorescent proteins, respectively.

Fig. 8     shows the SSR of the FRAP data of Fig. 7 as compared to corresponding model calculations.

Fig. 9     shows a graph showing the relationship between the mean square of the average distance $\overline{\Delta x}$ from the bleach event and the characteristic translocation time $\overline{\Delta t}$.

DESCRIPTION OF THE PREFERRED EMBODIMENT

For the purposes of promoting an understanding of the principles of the invention, reference will now be made to the preferred embodiment illustrated in the drawings and specific language will be used to describe the same. It will, nevertheless, be understood that no limitation of the scope of the invention is thereby intended, such alterations and further modifications in the illustrated method and system and such further applications of the principles of the invention as illustrated therein being contemplated as would normally occur now or in the future to one skilled in the art to which the invention relates.

In the following section, first a qualitative explanation of the method will be given. In a second section, a precise mathematical derivation will be given that allows to accurately model different particle mobilities and explain the resulting fluorescence intensity profiles quantitatively, thus providing an algorithm for the implementation of the said method in a computer program. In a third section, experimental results will be shown.

**1. Qualitative Explanation**

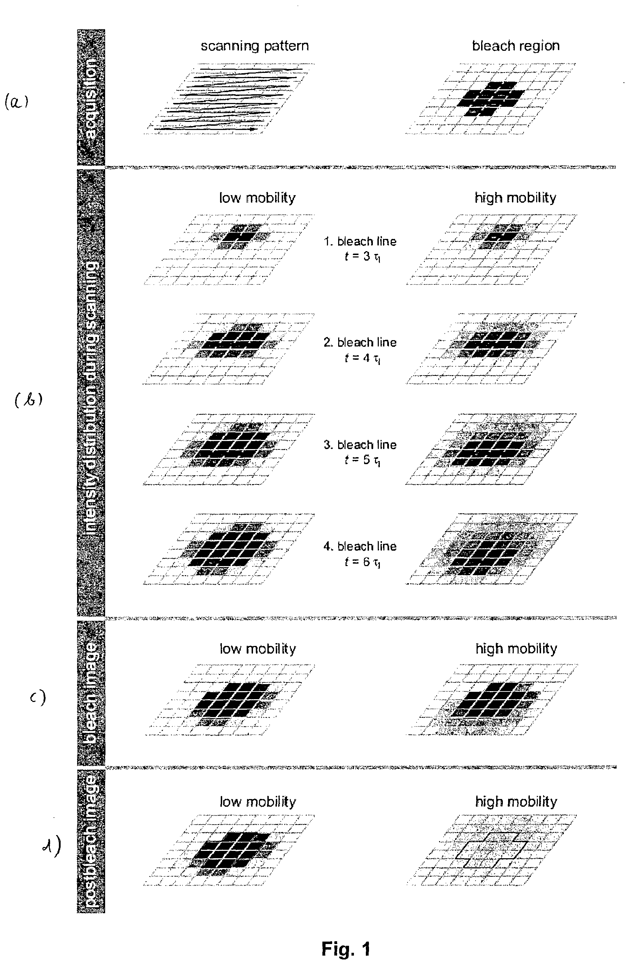

With reference to Fig. 1, the general concept of the invention shall be explained. In Fig. 1, a region of interest is shown that is to be analyzed with a scanning laser microscope. In particular, the left panel of Fig. 1(a) is a schematic representation of a scanning pattern carried out by the scanning laser microscope. In the scanning pattern, individual locations of the probe are scanned, where said locations are represented by "pixels" of the pixel-wise scan. Accordingly, in the following description, both the location as well as the corresponding part of the pixelized fluorescence image are referred to as "pixels". Typically, the scanning pattern of the scanning laser microscope is always the same, irrespectively of whether a photobleaching is carried out or a post-bleach image is recorded. In the example of Fig. 1, the scanning pattern is an ordinary line scan as indicated in the left panel of Fig. 1(a).

The right panel of Fig. 1(a) indicates the bleach region that is subjected to photobleaching. When the microscope passes pixels belonging to the "bleach region", the intensity of the excitation light is increased to thereby cause a bleach of the fluorescence markers in a way known per se from prior art.

Fig. 1(b) schematically shows the pixel-wise intensity distribution during the bleach scan, namely during scanning of the first to fourth bleach lines, corresponding to the third to sixth pixel line of the region of interest. In the schematic figure, the bleached region is shown in black, to indicate that the bleached particles are no longer fluorescent. Accordingly, in the fluorescence image, bleached particles will appear dark. Particles that have been bleached may move from the bleach region to non-bleached regions, where they will reduce the fluorescence intensity. The time scale of this translocation is a measure of the particle mobility that is generally also accounted for in ordinary FRAP.

However, while in ordinary FRAP only the particle movement between consecutive image frames is accounted for, depending on the mobility of the particles, there may already be significant particle translocations even during the time of a single scan. This is schematically shown in Fig. 1(b), where the left column corresponds to particles with low mobility and the right column corresponds to particles with high mobility. As can be seen from Fig. 1(b), the fluorescence image acquisition of some pixels is interleaved in time with the photobleaching of other pixels within the same scanning process. This means that when acquiring the fluorescence image at a given pixel later in the scan, the fluorescence intensity may be decreased by particles that have been bleached earlier in the scan and moved after bleaching to the given pixel position. This is particularly true for particles with high mobility, as is schematically shown in the right column of Fig. 1(b).

This observation leads to two conclusions, namely first, that the assumption of a "snap shot" of the fluorescence image is inaccurate, and second that the deviation from the "snap shot" concept already contains valuable information about the mobility of the particles. By explicitly accounting for time delays between scanning of individual pixels (or groups of pixel) within the same scanning process, this additional information about the mobility of particles can be obtained.

Fig. 1(c) shows the "bleach image", i.e. the fluorescence image acquired during and obtained at the end of the bleach scan. As is seen from the two bleach images of Fig. 1(c), although the same bleach has been carried out, the bleach image will look differently depending on the mobility of the particles. The reason is of course that due to the finite speed of the scanning process, each pixel of the scan has a different time stamp and that hence the concept of a "snap shot" is not correct.

Fig. 1(d) schematically shows the first "post-bleach image", i.e. the fluorescence image that is recorded in the first scan after the bleach scan. Note that this is actually the first fluorescence image that is recorded in ordinary FRAP, while the "bleach image" will typically be discarded. As is further schematically shown in Fig. 1(d), for particles with very high mobility, the time resolution of consecutive image frames is too low such as to discern the particle movement. This is why with ordinary FRAP, the mobility of fast particles can not be determined.

According to the present invention, it is therefore suggested to assess the particle mobility based on an analysis of the time evolution of the fluorescence intensity profile while accounting for time delays between scanning of individual pixels or groups of pixels within the same scanning process. This does not necessarily mean that only a single image frame, i.e. the "bleach image" is recorded. Instead, according to the invention the information from several consecutive image frames and multiple bleach events may be utilized, in particular with an eye on slowly diffusing or even immobilized particles. Thus, the determination of particle translocations from the correlation of signal intensities between pixels may comprise a pixel-wise analysis of (i) pixels within the bleach frame, (ii) pixels from different images of a time series, (iii) pixels from images of spatially separated regions, as for example images acquired at different positions along the optical axis of the microscope, or (iv) any combination of the aforementioned cases.

However, the method in any case extends the time resolution to the sub-image-frame time scale by accounting for the timing of individual pixels (or groups of pixels) within the same scanning process or unit scanning pattern. This new method is therefore also referred to by the inventors as "**P**ixel-wise **P**hotobleaching **P**rofile **E**volution **A**nalysis" (3PEA) for obvious reasons.

### 2. Quantitative Explanation

In the following section, a quantitative explanation of the method of the invention is given. More precisely, it will be derived how certain assumptions about particle mobilities and the inherent time structure of a scan process will materialize in certain fluorescence intensity profiles that can actually be measured. The purpose of this quantitative description is two-fold. First of all, it gives a quantitative understanding of how certain mobility parameters will affect an actually measured fluorescence intensity profile, and it further allows to quantitatively verify that a wide range of mobility time scales can in fact be correctly detected with the method. Second, the theoretical description is meant to enable the person skilled in the art to calculate model data for any desired mobility scenario, and provides the algorithm for implementing the named method in a computer program. This model data can then be used as reference for actual measurements, to thereby identify the corresponding mobility parameters in experimental data.

### 2.1 Bleaching a point

In the following, an expression is derived that yields the probability for a particle to be bleached at pixel position $\vec{x}_0$ and subsequently detected via a decrease of the fluorescence signal when the focus is located at pixel position $\vec{x}_1$. The point spread functions (PSFs) of the bleach beam are approximated by 3D-Gaussians. This is sufficiently accurate for all experimentally relevant scenarios since the 3PEA method relies on pixel distances rather than on the exact shape of the PSF. Further, the equations derived in the specific embodiment below apply for normal diffusion. To account for different diffusion models, spatial constraints of the particle mobility, binding interactions, or any combination thereof, the expression for the particle's mean squared displacement (MSD) that is contained in the expressions below may be substituted with the corresponding expressions. Thus, the theoretical description presented here can be used with any type of MSD and particle features of interest.

In a first step, we consider the probability $P_{\text{bleach}}$ for a particle located at $\vec{x}$ to be bleached while the focus is located at $\vec{x}_0$. Assuming that bleaching is a first-order process with a bleach rate proportional to the illumination intensity, the fluorescence decreases according to $\exp\left(-\gamma PSF_{\text{bleach}}^{1/2} \tau_{\text{bleach}}\right)$, which can be approximated as

$1 - \gamma PSF_{\text{bleach}}^{1/2} \tau_{\text{bleach}}$, since $\tau_{\text{bleach}}$ is the pixel time that is rather short and typically of the order of some $\mu$s only. The bleach probability density can be expressed as

$$P_{\text{bleach}}(\vec{x}, \vec{x}_0) = \beta PSF_{\text{bleach}}^{1/2}(\vec{x}, \vec{x}_0) = \beta \exp\left(-\frac{(x-x_0)^2 + (y-y_0)^2}{w_b^2} - \frac{(z-z_0)^2}{z_b^2}\right). \tag{1}$$

In eq. (1), $\beta = \gamma \tau_{\text{bleach}}$ is the bleach depth, and $w_b$ and $z_b$ denotes the beam waist of the bleach PSF in lateral and axial directions, respectively. Since the high laser intensities during the bleach typically lead to an enlarged PSF, a specific set of structure parameters $(w_b, z_b)$ is used for the bleach PSF.

In a second step, a probability density $P_{\text{diff}}$ for a particle located at $\vec{x}$ to diffuse to $\vec{x}'$ during time $\Delta t$ is calculated. This probability density amounts to

$$P_{\text{diff}}(\vec{x}, \vec{x}', \Delta t) = \frac{1}{(4\pi D\Delta t)^{3/2}} \exp\left(-\frac{(x-x')^2 + (y-y')^2 + (z-z')^2}{4D\Delta t}\right). \tag{2}$$

Herein, $D$ is the diffusion coefficient and $d^2 = 4D\Delta t$ is the particle's MSD for normal diffusion. Accordingly, the temporal distance $\Delta t$ between two pixels directly reflects the inherent timing of the scanning process, which is a line-by-line scan in the present embodiment. If a different scan pattern was employed, the temporal distance between pixels would be adapted accordingly.

$\Delta t$ is the temporal distance between two pixels at $(x_0, y_0)$ and $(x_1, y_1)$ within the same image depends on their spatial coordinates and can be written as

$$\Delta t_{\text{pixel}} = \frac{(x_1 - x_0)}{v}\tau_{\text{p}} + \frac{(y_1 - y_0)}{v}\tau_{\text{l}} \tag{3}$$

Here, $\tau_{\text{p}}$ denotes the time required for moving the focus to the adjacent pixel in the same line, $\tau_{\text{l}}$ is the time required to reach the adjacent pixel in the following line, $x$ and $y$ are the pixel coordinates, and $v$ is the voxel size.

Note that $P_{\text{diff}}(\vec{x}, \vec{x}', \Delta t)$ can be regarded as a "probability propagator". While the probability propagator in equation (2) above is based on ordinary diffusion, the invention is by no means limited to this. Instead, any type of probability propagator can be included in the model, including those accounting for particle binding interactions or spatial constraints. For example, spatial constraints can be accounted for by introducing a so-called anomaly exponent to $\Delta t$ in equation (2) above, i.e. replacing "$\Delta t$" by "$\Delta t^{\alpha}$", where "$\alpha$" is the anomaly exponent. In the case of binding, the expression for the propagator could be represented as follows:

$$P_{\text{diff+bind}}\left(\vec{x}_0, \vec{x}_1, \Delta t\right) = F_{\text{eq}} P_{\text{diff}}\left(\vec{x}_0, \vec{x}_1, F_{\text{eq}}\Delta t\right)$$
$$+ C_{\text{eq}} \int_0^{\Delta t} dt_{\text{res}}\, k_{\text{off}}\, e^{-k_{\text{off}}t_{\text{res}}} P_{\text{diff}}\left(\vec{x}_0, \vec{x}_1, F_{\text{eq}}\left(\Delta t - t_{\text{res}}\right)\right) \tag{4}$$
$$+ C_{\text{eq}}\, e^{-k_{\text{off}}\Delta t}\, \delta(\vec{x}_0 - \vec{x}_1)$$

Here, $F_{\text{eq}}$ and $C_{\text{eq}}$ are the free and the bound fractions in steady state, respectively. The first line of equation (4) represents particles that are free and diffuse until they encounter a binding site after $F_{\text{eq}}\Delta t$; the second line represents particles that are bound for some time $t_{\text{res}} < \Delta t$, dissociate and diffuse for the rest of the time $\Delta t - t_{\text{res}}$; and the third line represent particles that remain bound for a time $t_{\text{res}} > \Delta t$. For more sophisticated combinations of diffusion, spatial constraints and binding interactions, the propagator can be formulated according to the expressions given above. Finally, the fluorescence intensity contribution $\Psi_{\text{det}}$ of a fluorescent particle located at $\vec{x}'$ when the microscope focus is at $\vec{x}_1$ is calculated as follows:

$$\Psi_{\mathrm{det}}(\vec{x}',\vec{x}_1) = PSF_{\mathrm{det}}^{1/2}(\vec{x}',\vec{x}_1) = \exp\left(-\frac{(x'-x_1)^2 + (y'-y_1)^2}{w_0^2} - \frac{(z'-z_1)^2}{z_0^2}\right) \tag{5}$$

Herein, the beam waists $w_0$ and $z_0$ in lateral and axial directions correspond to the normal excitation beam. Based on eq. (1) to (5), the fluorescence intensity reduction at $\vec{x}_1$ caused by particles bleached with a focus at in $\vec{x}_0$ can be calculated according to

$$N_{x_0 \to x_1}^{\mathrm{r2c}}(\vec{x}_0,\vec{x}_1,\Delta t) = c\int_{-\infty}^{\infty} dx' \int_{-\infty}^{\infty} dy' \int_{-\infty}^{\infty} dz' \, \Psi_{\mathrm{det}}(\vec{x}',\vec{x}_1) \int_{-\infty}^{\infty} dx \int_{-\infty}^{\infty} dy \int_{-\infty}^{\infty} dz \, P_{\mathrm{bleach}}(\vec{x},\vec{x}_0) P_{\mathrm{diff}}(\vec{x},\vec{x}',\Delta t) \tag{6}$$

Since overlapping bleach PSFs have to be considered for 2-dimensional bleach regions, the bleach PSF is split up into a sum of cuboids. The intensity differences within a single cuboid can be neglected and the integral in eq. (6) is divided into two parts: the average cuboid bleach probability $\langle P_{\mathrm{bleach},i}\rangle$ and the translocation probability $P_{x_i \to x_1}^{\mathrm{r2c}}$:

$$
\begin{aligned}
N_{x_0 \to x_1}^{\mathrm{r2c}}(\vec{x}_0,\vec{x}_1,\Delta t) &= \sum_i c\int_{-\infty}^{\infty} dx' \int_{-\infty}^{\infty} dy' \int_{-\infty}^{\infty} dz' \, \Psi_{\mathrm{det}}(\vec{x}',\vec{x}_1) \int_{x_i-r_x}^{x_i+r_x} dx \int_{y_i-r_y}^{y_i+r_y} dy \int_{z_i-r_z}^{z_i+r_z} dz \, P_{\mathrm{bleach}}(\vec{x},\vec{x}_0) P_{\mathrm{diff}}(\vec{x},\vec{x}',\Delta t) \\
&= \sum_i c\langle P_{\mathrm{bleach},i}\rangle(\vec{x}_0) \int_{-\infty}^{\infty} dx' \int_{-\infty}^{\infty} dy' \int_{-\infty}^{\infty} dz' \, \Psi_{\mathrm{det}}(\vec{x}',\vec{x}_1) \int_{x_i-r_x}^{x_i+r_x} dx \int_{y_i-r_y}^{y_i+r_y} dy \int_{z_i-r_z}^{z_i+r_z} dz \, P_{\mathrm{diff}}(\vec{x},\vec{x}',\Delta t) \\
&= \sum_i \frac{cV_{\mathrm{eff}}}{8}\langle P_{\mathrm{bleach},i}\rangle(\vec{x}_0) \left[\mathrm{erf}\left(\frac{x_i - x_1 + r_x}{\sqrt{w_0^2 + d^2}}\right) - \mathrm{erf}\left(\frac{x_i - x_1 - r_x}{\sqrt{w_0^2 + d^2}}\right)\right] \\
&\quad \left[\mathrm{erf}\left(\frac{y_i - y_1 + r_y}{\sqrt{w_0^2 + d^2}}\right) - \mathrm{erf}\left(\frac{y_i - y_1 - r_y}{\sqrt{w_0^2 + d^2}}\right)\right]\left[\mathrm{erf}\left(\frac{z_i - z_1 + r_z}{\sqrt{z_0^2 + d^2}}\right) - \mathrm{erf}\left(\frac{z_i - z_1 - r_z}{\sqrt{z_0^2 + d^2}}\right)\right]
\end{aligned}
\tag{7}
$$

$$\langle P_{\mathrm{bleach},i}\rangle(\vec{x}_0) = \frac{1}{V_{b,i}} \int_{x_i-r_x}^{x_i+r_x} dx \int_{y_i-r_y}^{y_i+r_y} dy \int_{z_i-r_z}^{z_i+r_z} dz \, P_{\mathrm{bleach}}(\vec{x},\vec{x}_0).$$

with the average cuboid bleach probability                                                                    Each part of the sum in eq. (7) gives the reduced intensity due to the presence of particles bleached in a single cuboid centered at $\vec{x}_i$ with edge length $2r_x$, $2r_y$ and $2r_z$. For high laser intensities - as they are typically used for FRAP experiments - the axial beam waist becomes very large. For this case (in the limit $z_b \to \infty$, $r_z \to \infty$), the axial dependence can be neglected and eq. (7) is written as

$$N_{x_0 \to x_1}^{\mathrm{r2c}*}(\vec{x}_0,\vec{x}_1,\Delta t) = cV_{\mathrm{eff}} \sum_i \langle P_{\mathrm{bleach},i}\rangle P_{x_i \to x_1}^{\mathrm{r2c}*}(\vec{x}_i,\vec{x}_1,\Delta t) \tag{8}$$

$$\text{with } P_{x_i \to x_1}^{\mathrm{r2c}*} = \frac{1}{4}\left[\mathrm{erf}\left(\frac{x_i - x_1 + r_x}{\sqrt{w_0^2 + d^2}}\right) - \mathrm{erf}\left(\frac{x_i - x_1 - r_x}{\sqrt{w_0^2 + d^2}}\right)\right]\left[\mathrm{erf}\left(\frac{y_i - y_1 + r_y}{\sqrt{w_0^2 + d^2}}\right) - \mathrm{erf}\left(\frac{y_i - y_1 - r_y}{\sqrt{w_0^2 + d^2}}\right)\right].$$

## 2.2 Bleaching a line

For typical scan speeds, the line time $\tau_1$, is on the millisecond timescale and thus corresponds to the dwell time of a molecule in one pixel (or, more precisely, one diffraction-limited spot). Therefore, as a very good approximation, diffusion during the bleach process of a single bleach line, or a line-segment can be neglected. This reduces the computational cost of the calculations significantly. Based on the bleach probability in a single spot (eq. 1-8), the bleach distribution after sequentially bleaching several spots along a line is derived. The intensity in $\vec{x}$ after $n$ bleach events in $\vec{x}_i$ is given by

$$I(\vec{x},n) = 1 - P_{\text{bleach}}(\vec{x},n) = \prod_{i=0}^{n}\left(1 - \beta PSF_{\text{bleach}}^{1/2}(\vec{x},\vec{x}_i)\right) = \exp\left(\ln\left(\prod_{i=0}^{n}\left(1 - \beta PSF_{\text{bleach}}^{1/2}(\vec{x},\vec{x}_i)\right)\right)\right)$$

$$= \exp\left(\sum_{i=0}^{n}\ln\left(1 - \beta\exp\left(-\frac{(x-x_i)^2 + (y-y_0)^2}{w_b^2} - \frac{(z-z_0)^2}{z_b^2}\right)\right)\right) \qquad . \qquad (9)$$

Thus, if a line between $-x_b$ and $x_b$ is bleached, the intensity distribution can be expressed as

$$I(\vec{x},\vec{x}_0,\vec{x}_b) = 1 - P_{\text{bleach}}(\vec{x},\vec{x}_b) = \exp\left(\int_{-x_b}^{x_b}\frac{dx_i}{w'}\ln\left(1 - \beta\exp\left(-\frac{(x-x_i)^2 + (y-y_0)^2}{w_b^2} - \frac{(z-z_0)^2}{z_b^2}\right)\right)\right) \qquad (10)$$

Here, $w'$ is a scale factor adjusting the effective bleach depth per line segment. To solve the integral given in eq. (10), the logarithm is represented by a series expansion, yielding

$$P_{\text{bleach}}^{\text{line}}(\vec{x},\vec{x}_0,\vec{x}_b) = 1 - \exp\left(\int_{-x_b}^{x_b}\frac{dx_i}{w'}\sum_{n=1}^{\infty}\frac{(-1)^{n+1}}{n}\left(-\beta\exp\left(-\frac{(x-x_i)^2 + (y-y_0)^2}{w_b^2} - \frac{(z-z_0)^2}{z_b^2}\right)\right)^n\right)$$

$$= 1 - \exp\left(-\sum_{n=1}^{\infty}\frac{1}{n}\left(\beta\exp\left(-\frac{(y-y_0)^2}{w_b^2} - \frac{(z-z_0)^2}{z_b^2}\right)\right)^n\int_{-x_b}^{x_b}\frac{dx_i}{w'}\exp\left(-n\frac{(x-x_i)^2}{w_b^2}\right)\right)$$

$$= 1 - \exp\left(-\frac{\sqrt{\pi}}{2w'}\sum_{n=1}^{\infty}\frac{w_n}{n}\left(\beta\exp\left(-\frac{(y-y_0)^2}{w_b^2} - \frac{(z-z_0)^2}{z_b^2}\right)\right)^n\left(\text{erf}\left(\frac{x+x_b}{w_n}\right) - \text{erf}\left(\frac{x-x_b}{w_n}\right)\right)\right)$$

$$. \; (11)$$

Herein, $w_n = \frac{w_b}{\sqrt{n}}$. The series in the exponential function decreases monotonically and the expression in the last line of eq. (11) converges. Depending on the desired accuracy, the series can be truncated accordingly to compute the numerical result. In the embodiments shown herein, the series was truncated at $n = 500$. In analogy to eq. (8), the number of particles that translocate from a pixel $\vec{x}_0$ within the bleached line into pixel $\vec{x}_1$ can be calculated by replacing $P_{\text{bleach}}(\vec{x},\vec{x}_0)$ with the line bleach probability $P_{\text{bleach}}^{\text{line}}(\vec{x},\vec{x}_0)$ given in eq. (11).

## 2.3 Bleaching a 2-dimensional region

In this section, the intensity distribution after bleaching a 2-dimensional region is derived. First, the fraction of particles bleached in a pixel of such a bleach region is calculated. This probability is not equal in all bleach pixels/lines. Instead, a particle can already be bleached when the focus is located at a precedent pixel/line due to the spatial extension of the bleach PSF and diffusive transport during the bleach process. The fraction of particles bleached in pixel $\vec{x}$ in the bleach region can be expressed by the following recursive relation

$$N_{\text{bleach}}\left(\vec{x},t\right) = P_{\text{bleach}}\left(\vec{x},\vec{x}_0\right)\left(\langle N\rangle - \sum_{t_i<t}\sum_{\substack{\vec{x}'\\ \in \text{PSF}_i}} N_{\text{bleach}}\left(\vec{x}',t_i\right) P_{x'\to x}^{\text{r2r}}\left(\vec{x}',\vec{x},t-t_i\right)\right). \tag{12}$$

The probability $P_{x'\to x}^{\text{r2r}}\left(\vec{x}',\vec{x},\Delta t\right)$ is the probability for a particle to be present in pixel $\vec{x}'$ and to translocate to pixel $\vec{x}$ during the time interval $\Delta t$. For cuboid pixels, this probability is given by

$$P_{x_0\to x_1}^{\text{r2r}}(\vec{x}',\vec{x},\Delta t) = \int_{x'-r_x}^{x'+r_x} d\tilde{x} \int_{y'-r_y}^{y'+r_y} d\tilde{y} \int_{z'-r_z}^{z'+r_z} d\tilde{z} \int_{x-r_x}^{x+r_x} d\hat{x} \int_{y-r_y}^{y+r_y} d\hat{y} \int_{z-r_z}^{z+r_z} d\hat{z}\, P_{\text{diff}}(\vec{\tilde{x}},\vec{\hat{x}},\Delta t) = \frac{1}{8}XYZ \tag{13}$$

with the following abbreviations:

$$X = \left(\Delta x + 2r_x\right)\text{erf}\left(\frac{\Delta x + 2r_x}{d}\right) + \left(\Delta x - 2r_x\right)\text{erf}\left(\frac{\Delta x - 2r_x}{d}\right) - 2\Delta x\,\text{erf}\left(\frac{\Delta x}{d}\right) + \sqrt{\frac{d^2}{\pi}}\left(e^{-\frac{(\Delta x+2r_x)^2}{d^2}} + e^{-\frac{(\Delta x-2r_x)^2}{d^2}} - 2e^{-\frac{\Delta x^2}{d^2}}\right)$$

$$Y = \left(\Delta y + 2r_y\right)\text{erf}\left(\frac{\Delta y + 2r_y}{d}\right) + \left(\Delta y - 2r_y\right)\text{erf}\left(\frac{\Delta y - 2r_y}{d}\right) - 2\Delta y\,\text{erf}\left(\frac{\Delta y}{d}\right) + \sqrt{\frac{d^2}{\pi}}\left(e^{-\frac{(\Delta y+2r_y)^2}{d^2}} + e^{-\frac{(\Delta y-2r_y)^2}{d^2}} - 2e^{-\frac{\Delta y^2}{d^2}}\right)$$

$$Z = \left(\Delta z + 2r_z\right)\text{erf}\left(\frac{\Delta z + 2r_z}{d}\right) + \left(\Delta z - 2r_z\right)\text{erf}\left(\frac{\Delta z - 2r_z}{d}\right) - 2\Delta z\,\text{erf}\left(\frac{\Delta z}{d}\right) + \sqrt{\frac{d^2}{\pi}}\left(e^{-\frac{(\Delta z+2r_z)^2}{d^2}} + e^{-\frac{(\Delta z-2r_z)^2}{d^2}} - 2e^{-\frac{\Delta z^2}{d^2}}\right)$$

Here, $d^2$ is the particle's MSD and $\Delta x = \hat{x} - \tilde{x}$, $\Delta y = \hat{y} - \tilde{y}$ and $\Delta z = \hat{z} - \tilde{z}$. Based on eq. (12) and (13), the intensity distribution after an arbitrary number of bleach events can be expressed according to

$$I\left(\vec{x},\Delta t\right) = \varepsilon\left(\langle N\rangle - \sum_{t_i}\sum_{\vec{x}'\in\text{PSF}_i} N_{\text{bleach}}\left(\vec{x}',t_i\right) P_{x'\to x}^{\text{r2c}}\left(\vec{x}',\vec{x},\Delta t - t_i\right)\right) \tag{14}$$

Here, $\varepsilon$ is the brightness of the molecules, i.e. the amount of detected signal per molecule. The maximum signal that can be obtained is $I_{\text{max}} = \varepsilon\langle N\rangle$. This value is reduced if bleaching has already occurred in preceding pixels. With the knowledge of the microscope parameters used in the experiment (pixel time $\tau_p$, line time $\tau_l$ frame time $\tau_f$, beam waists $w_0$ and $w_b$) the expression in eq. (14) can readily be used to fit intensity profiles and to determine mobility parameters.

As outlined above, the general theoretical framework can account for anomalous diffusion and/or binding events explicitly by modifying the probability propagator of equation (2) or (4) accordingly. The size of the voxels in the calculation should be smaller than the PSF and is chosen according to the desired accuracy and computation speed of the analysis.

To save computational time, diffusion occurring during the bleach of line-segments or whole bleach lines can be neglected by using a line-shaped bleach PSF as described above. For typical scan speeds and diffusion coefficients this simplification is justified. We note that the 3PEA framework derived above is valid for arbitrary shapes of the bleach region and scan trajectories. The latter feature is particularly important if pixel times differ along the scan line, which is typically the case for CLSM setups.

### 2.4 Limit for free diffusion and infinitely fast scanning

In the limit of infinitely fast scanning and negligible beam waist, the above theoretical description yields the state-of-the-art diffusion-dominant model described in Soumpasis, D.M. Theoretical analysis offluorescence photobleaching recovery experiments. Biophys. J.41, 95-97 (1983) and Sprague, B.L., Pego, R.L., Stavreva, D.A. & McNally, J.G. Analysis of binding reactions by fluorescence recovery after photobleaching. Biophys. J.86, 3473-3495 (2004). Under these conditions, eq. (2) for the probability to bleach a particle in $\vec{x}_0$ and to detect it in $\vec{x}_1$ yields

$$P_{x_0 \to x_1}^{\lim}\left(\vec{x}_0, \vec{x}_1, \Delta t\right) = \frac{\beta}{4\pi D \Delta t} e^{-\frac{(x_1 - x_0)^2 + (y_1 - y_0)^2}{4D\Delta t}} . \tag{15}$$

In case of infinitely fast scanning, the time $\Delta t$ corresponds to the time $\tau_f$ to acquire one image frame. The number of bleached particles is equal in every pixel, i.e. eq. (6) is not required. To obtain the intensity profile after having bleached a circle with radius R located around the center of the image (0,0), the sum in eq. (7) is replaced by an integral:

$$\begin{aligned} I(\vec{x}, m) &= \varepsilon \langle N \rangle \left( 1 - \int_{\vec{x}' \in \text{ROI}} d\vec{x}' \, P_{x' \to x}^{\lim}\left(\vec{x}', \vec{x}, m\tau_f\right) \right) \\ &= \varepsilon \langle N \rangle \left( 1 - \frac{\beta}{4\pi D s^2 m\tau_f} \int_0^R rr' \, dr' \int_0^{2\pi} d\varphi' \, e^{-\frac{r^2 + r'^2 - 2rr'\cos\varphi'}{4Ds^2 m\tau_f}} \right) \\ &= \varepsilon \langle N \rangle \left( 1 - \frac{\beta}{2Ds^2 m\tau_f} \int_0^R rr' e^{-\frac{r^2 + r'^2}{4Ds^2 m\tau_f}} dr' \, I_0\left(\frac{rr'}{2Ds^2 m\tau_f}\right) \right) \end{aligned} \tag{16}$$

Here, $I_0(x)$ denotes the modified Bessel function of the first kind and $m$ is the number of the post-bleach frame. In the last step, the integral representation of $I_0(x)$ was used. The integral in the last line of eq. (16) corresponds to the one used by Soumpasis (eq. (9) in Sprague, B.L., Pego, R.L., Stavreva, D.A. & McNally, J.G. Analysis of binding reactions by fluorescence recovery after photobleaching. Biophys. J.86, 3473-3495 (2004)) to derive the current state-of-the-art FRAP model for free diffusion, which for $\beta = 1$ is given by

$$I_{\text{ROI}}(m) = \int_{\vec{x} \in \text{ROI}} d\vec{x} \, I(\vec{x}, m) = \varepsilon \langle N \rangle e^{-\frac{R^2}{2Ds^2 m\tau_f}} \left[ I_0\left(\frac{R^2}{2Ds^2 m\tau_f}\right) + I_1\left(\frac{R^2}{2Ds^2 m\tau_f}\right) \right] \tag{15}$$

### 3. Examples

In the following, specific examples of the method will be shown.

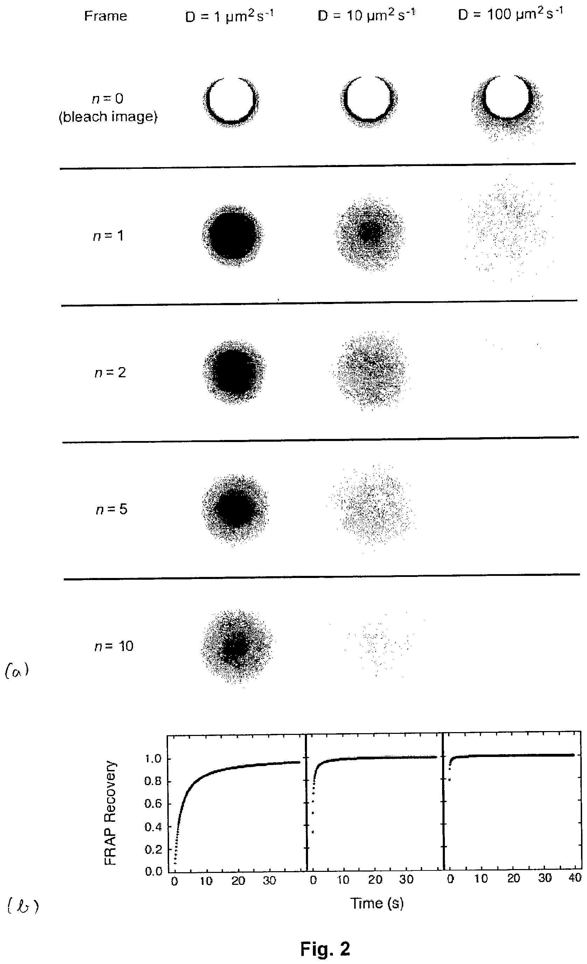

In Fig. 2(a), the time evolution of intensity profiles for particles with different diffusion coefficients are shown. Herein, the intensity profiles have been calculated according to equation (14), where $\Delta t$ in equation (14) corresponds to multiples of the time for a complete scan process or image frame.

In Fig. 2(a), the three columns correspond to different diffusion coefficients $D = 1\ \mu m^2\ s^{-1}$, $D = 10\ \mu m^2\ s^{-1}$ and $D = 100\ \mu m^2\ s^{-1}$, respectively. The data sets have been obtained by introducing the corresponding values of the diffusion coefficient D in the probability propagator of equation (2).

In vertical order, Fig. 2(a) shows the intensity profile for the bleach image scan (n = 0), as well as the intensity profiles that would be obtained in the first, second, fifth and tenth "post-bleach" scan process. As is seen from Fig. 1(a), there is a characteristic corona around the bleach region of the bleach image, which is indicative of a bleached particle translocation that occurred during the bleach image scan. Also, for larger diffusion coefficients the corona has a larger extent than for small diffusion coefficients, since the particle mobility is increased. According to the invention, the translocation of particles within the bleach image scan is already accounted for to give information about the mobility of the particles. In fact, for a high diffusion constant of D = 100 $\mu m^2 s^{-1}$ as shown in the right column, this is the only information that can be discerned since in the first post-bleach scan, the fluorescence has practically recovered already. Fig. 2(b) shows the FRAP recovery curves based on the model calculation.

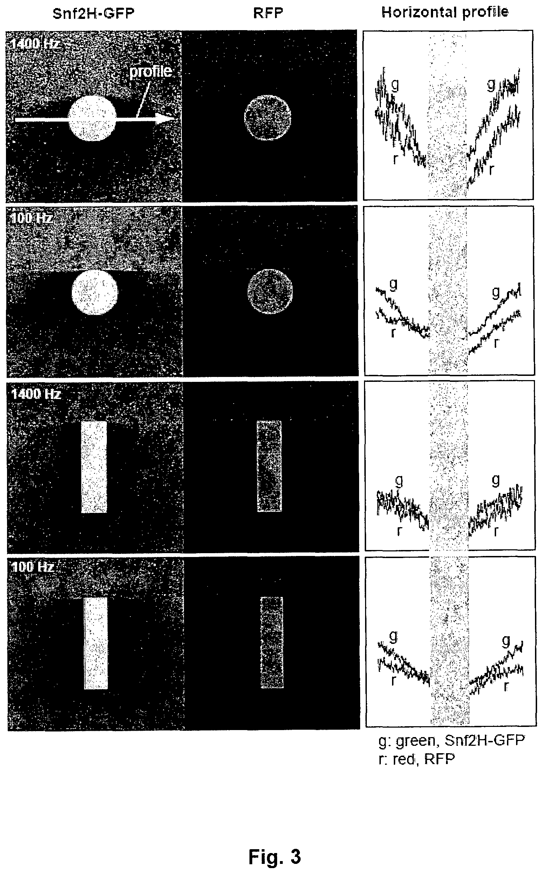

Fig. 3 shows an experimental implementation of the method of the invention. In the experiment, the protein mobilities of the chromatin remodeler Snf2H fused with the autofluorescent green fluorescent protein, GFP, (Snf2H-GFP) and red fluorescent protein, RFP, were simultaneously measured in living cells of the human U2OS osteosarcoma cell line. Both rectangular and circular bleach regions of 0.5 $\mu m$ width/1 $\mu m$ diameter were used.

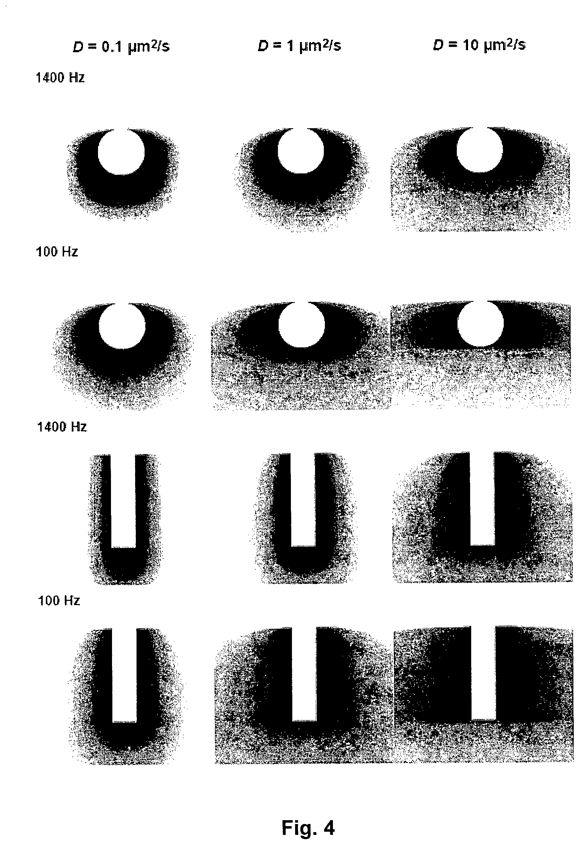

For comparison, model intensity profiles for different diffusion coefficients and scan speeds were calculated, as shown in Fig. 4. As expected, the bleach corona gets broader with increasing diffusion coefficient and decreasing scan speed both in the experimental and the calculated profiles. This shows that the theoretical 3PEA framework can reproduce the key features of the experimentally obtained bleach profiles. By visual inspection of both the theoretical and experimental profiles, Snf2H-GFP displays the largest similarity to the $D = 1$ $\mu m^2 s^{-1}$ case, whereas the broader corona of free RFP fits better to the profile computed for D = 10 $\mu m^2 s^{-1}$. This difference is expected since Snf2H-GFP - as opposed to RFP - interacts transiently with the genome in the cell nucleus, and is thus slowed down.

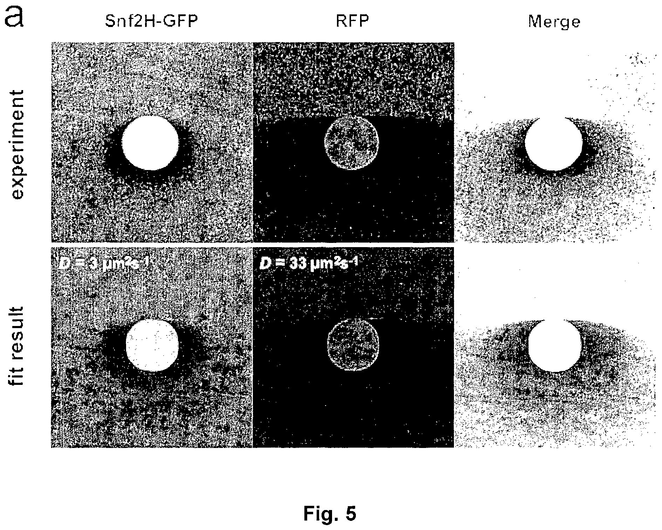

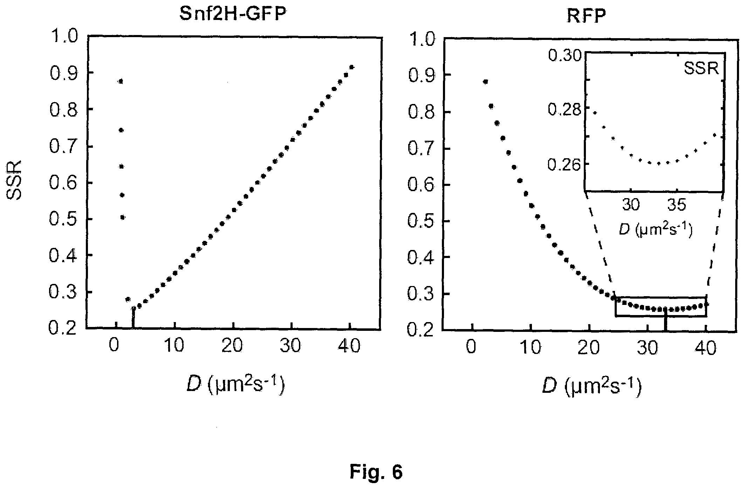

To obtain quantitative mobility information from 3PEA experiments, the acquired intensity distributions were fitted against theoretical profiles, see Figs. 5 and 6. The best fit was determined based on the sum of squared residuals (SSR). This value is a measure of the fit quality and has a minimum for the calculated fluorescence intensity profile with the largest similarity to the experimental data. The method yielded a diffusion coefficient of $D = 3 \pm 1$ $\mu m^2 s^{-1}$ for Snf2H-GFP and D = 33 $\pm$ 6 $\mu m^2 s^{-1}$ for RFP, as is seen in Fig. 6. It is noted that the diffusion coefficient measured for Snf2H-GFP includes the transient binding of the protein as discussed previously.

The conventional FRAP analysis conducted using the same data set yielded D = 0.7 $\mu m^2 s^{-1}$ (with a confidence interval *of D =* 0.5 - 2.0 $\mu m^2 s^{-1}$) for Snf2H-GFP but failed to determine the diffusion coefficient for RFP, as is seen in Fig. 6. The 3PEA results are in very good agreement with previous FCS measurements of Snf2H-GFP (D = 3.9 $\pm$ 0.4 $\mu m^2 s^{-1}$), see Erdel, F., Schubert, T., Marth, C., Langst, G. & Rippe, K. Human ISWI chromatin-remodeling complexes sample nucleosomes via transient binding reactions and become immobilized at active sites. Proc. Natl. Acad. Sci. USA107, 19873-19878 (2010*), or free GFP/RFP, for which diffusion coefficients of 20-30 $\mu m^2 s^{-1}$ have been obtained, see Pack, C., Saito, K., Tamura, M. & Kinjo, M. Microenvironment and effect of energy depletion in the nucleus analyzed by mobility of multiple oligomeric EGFPs. Biophys. J.91, 3921-3936 (2006*) and Hendrix, J., Flors, C., Dedecker, P., Hofkens, J. & Engelborghs, Y. Dark states in monomeric red fluorescent proteins studied by fluorescence correlation and single molecule spectroscopy. Biophys J94, 4103-4113 (2008*). As expected based on previous reports, conventional FRAP underestimated the diffusion coefficient due to the corona that forms during the bleach process, see Weiss, M. Challenges and artifacts in quantitative photobleaching experiments. Traffic5, 662-671 (2004*) and Kang, M., Day, C.A., Drake, K., Kenworthy, A.K. & DiBenedetto, E. A generalization of theory for two-dimensional fluorescence recovery after photobleaching applicable to confocal laser scanning microscopes. Biophys. J.97, 1501-1511 (2009*).

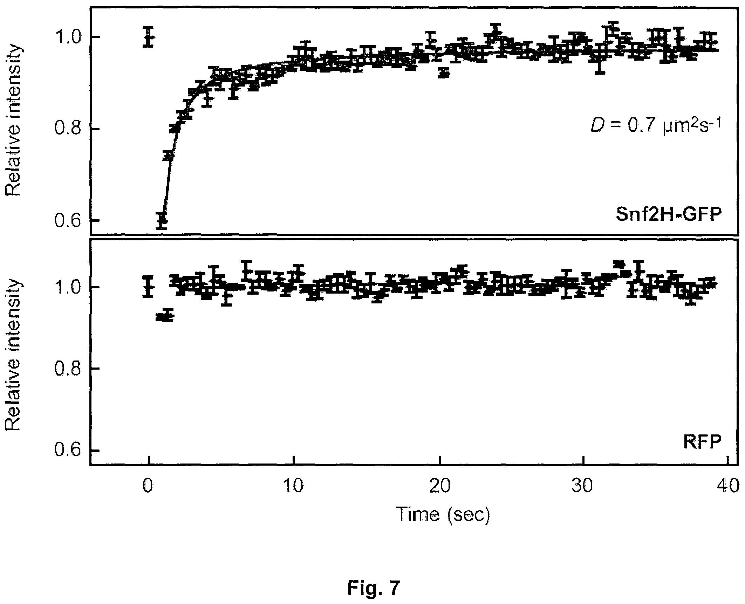

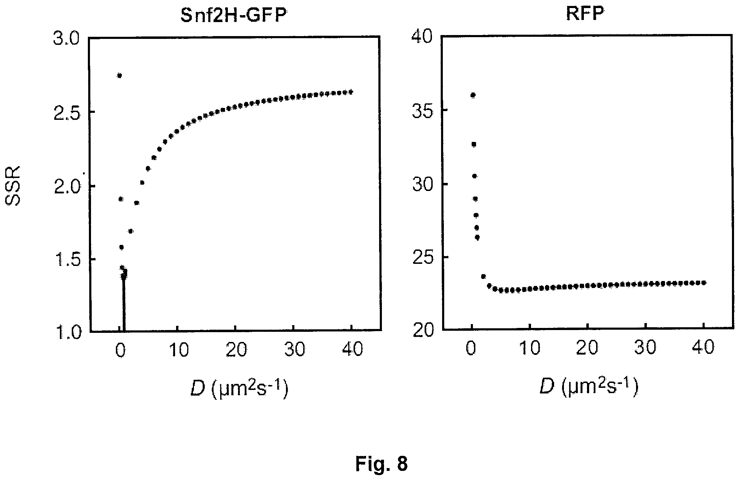

As has been shown above, by comparing the fluorescence intensity measurements with model data that is obtained according to the mathematical framework described in section 2 above, the mobility of particles can be discerned with very good accuracy. In particular, as is seen from Fig. 6, the method of the invention allows to discern both, comparatively low diffusion constants (Snf2H-GFP) and comparatively large diffusion constant (RFP) from the same measurement, and in particular, from analysis of the bleach scan image only. This is particularly remarkable with regard to the Snf2H-GFP protein, since even the comparatively slow motion can be correctly captured in the single image frame, thereby dramatically reducing the measurement time as compared to FRAP. Nevertheless, as mentioned before, the method of the invention also may account for as many post-bleach scans as desired, which allows to further improve the accuracy of the mobility measurement for slower particles. Also, with reference to the RFP, it is shown that the diffusion constant can be determined with good accuracy which is not obtainable by ordinary FRAP, see Figs. 7 and 8.

In practice, a library of modelled fluorescence intensity profiles for different mobilities can be generated according to the theoretical framework introduced in section 2 above. Then, the actually measured intensity profiles only need to be compared with the predetermined intensity profiles to determine which model calculation fits the measurement best. In particular, since the theoretical model introduced herein allows to include all kinds of dynamics, including particle diffusion, constraints, particle binding interactions and directed particle transport, such library could account for many different kinds of mobility models and therefore lead to a very sophisticated analysis of the fluorescence intensity data.

However, comparing the fluorescence intensity profiles with explicit model calculation data is only one way of implementing the present invention. After having shown that the mobility information is generally included in the time evolution of the fluorescence intensity profile when accounting for time delays between scanning of individual pixel or group of pixels within the same scanning process, other schemes may be devised for extracting mobility information from the fluorescence intensity profile. One such possibility would be to find an empirical approximation for the horizontal and vertical intensity profiles through the center of the bleach region that depends on the particle mobility. Furthermore, the width of the corona in lateral direction, which contains important information about fast translocations especially in the first scan lines of the bleach region, could be approximated by an empirical expression depending on the mobility parameters of the particle. In this way, evaluation of subsets of pixels might be sufficient to retrieve mobility information without calculating or fitting the whole intensity profiles.

Finally, it is emphasized that the invention is not limited to the embodiment described above, and in particular, that some of the assumptions made in the derivation of equation (14) are not limiting. For example, in equation (7), the PSF is split up into a sum of cuboids of arbitrary size, and the further calculation is based on these cuboids. However, it is emphasized that with sufficiently small cuboids, any desirable PSF can be described, and in particular a Gaussian PSF is by no means necessary. Further, in equation (8), essentially a projection of the diffusion process on two dimensions is made which is quite appropriate in view of the large axial extent of the PSF for typical confocal microscopes. However, this approximation is not necessary either, since it will also be possible to sum over the cuboids in longitudinal direction of equation (7). This means that the method can indeed be employed for arbitrary PSFs. This is particularly relevant for microscopy techniques with different PSFs like the 4Pi-microscopy or "stimulated emission depletion microscopy".

While a line scan trajectory was assumed in the model calculation, any other scan trajectory can be used, in particular a bi-directional scanning or a spiral scanning. In the calculation, only the time stamps of the pixels would have to be adapted accordingly. Also, it is not necessary that the scan is carried out at a constant speed, as again a varying scan speed could be accounted for by adjusting the time stamps of individual pixels.

As mentioned before, in the probability propagator of equation (2), a free diffusion has been assumed, in which the mean squared displacement (MSD) is related to the diffusion coefficient. However, within the same mathematical framework, alternative assumption for the MSD can be employed in order to account for other kinds of motion. For example, the probability propagator of equation (2) could also account for anomalous or constricted diffusion, a directed movement, an accelerated movement, an oscillation or the like. Furthermore, binding processes can be accounted for in addition to the respective particle movement, as shown in equation (4). For this, it is only necessary to introduce the corresponding expressions for the propagator in the mathematical framework discussed above.

Finally, it is also possible to obtain information about particle mobility in a model-independent manner. For example, the translocation probability distribution $P(\overline{\Delta x}, \overline{\Delta t})$ can be directly calculated from the intensity profile by assigning a characteristic spatial and temporal distance with respect to the set of bleach events to every pixel. In this case, $\overline{\Delta x}$ and $\overline{\Delta t}$ are averaged values, and thus not exact. Nevertheless, they reflect that each pixel predominantly contains information about a certain range of length and time scales. Based on these characteristic distances, the effective translocation probability can be directly obtained from the pixel intensity via the relation

$$1 - \frac{I(\overline{\Delta x}, \overline{\Delta t})}{\overline{I}} = P(\overline{\Delta x}, \overline{\Delta t}).$$

Here, $\overline{I}$ is the average intensity and $I(\Delta x, \Delta t)$ is the intensity of the respective pixel.

For example, a characteristic temporal distance can be determined according to

$$\overline{\Delta t} = \frac{\sum\limits_{\vec{x} \in \mathrm{ROI}} \sum\limits_{\vec{x}' \in \mathrm{PSF}} \Delta t\left(\vec{x}, \vec{x}'\right) \cdot |\vec{x} - \vec{x}'|^{-1}}{\sum\limits_{\vec{x} \in \mathrm{ROI}} \sum\limits_{\vec{x}' \in \mathrm{PSF}} |\vec{x} - \vec{x}'|^{-1}}.$$

Herein, $\overline{\Delta t}(\vec{x}, \vec{x}')$ represents the temporal distance between pixels $\vec{x}$ and $\vec{x}'$ (according to Eq. 3). The $|\vec{x} - \vec{x}'|^{-1}$ term is a weight factor accounting for the fact that particles diffusing larger distances are underrepresented in a given pixel, because in a 2D process, every pixel $\vec{x}'$ can be regarded as a radial line segment of a circle around the originating pixel $\vec{x}$. For simplicity, it is neglected that bleaching also occurs at pixels outside the nominal bleach region due to the spatial extension of the PSF.

The characteristic spatial distance may be calculated in an analogous manner:

$$\overline{\Delta x} = \frac{\sum_{\vec{x} \in \text{ROI}} \sum_{\vec{x}' \in \text{PSF}} \Delta x(\vec{x}, \vec{x}') \cdot |\vec{x} - \vec{x}'|^{-1}}{\sum_{\vec{x} \in \text{ROI}} \sum_{\vec{x}' \in \text{PSF}} |\vec{x} - \vec{x}'|^{-1}}.$$

Herein, $\Delta x(\vec{x}, \vec{x}') = |\vec{x} - \vec{x}'|$ represents the spatial distance between pixels $\vec{x}$ and $\vec{x}'$.

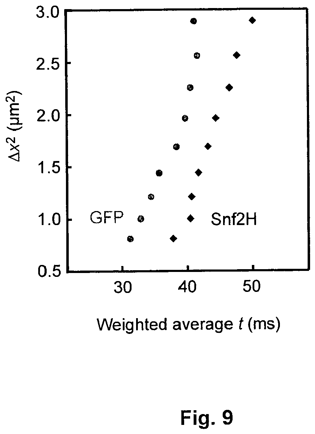

With this approach, typical translocation times can be derived for every spatial distance in the experiment and converted into a plot of the mean squared value of $\Delta x$ vs. the weighted average translocation time as is shown in Fig. 9 with reference to GFP and Snf2H as examples. As is seen in Fig. 9, the relationship of $\overline{\Delta x^2}$ vs. $\overline{\Delta t}$ is approximately linear, which indicates that the mobility can be to a good approximation attributed to a diffusional behavior. The slope of the curves can be interpreted as an approximate measure of the diffusion constant.

This approach is of course less accurate than fitting the experimental data to theoretical intensity distributions. However, it requires no assumption on the type of the underlying translocation process and provides valuable diagnostic information on the contribution of diffusion, binding, and spatial constraints to the observed particle mobility.

The embodiments described above and the accompanying figures merely serve to illustrate the method according to the present invention, and should not be taken to indicate any limitation thereof. The scope of the patent is solely determined by the following claims.

## Claims

1. A method for determining the mobility of fluorescent particles or particles tagged with a fluorescent marker, based on at least one fluorescence image of a sample,
said at least one fluorescence image being generated in a process comprising

   - a fluorescence properties changing step of locally irradiating the sample such as to carry out a local light-induced change of the fluorescence properties of the fluorescent particles, said light-induced change comprising one of the following:

      • a photobleaching,
      • a light-induced activation of fluorescence in a fraction of particles that are initially non-fluorescent,
      • a light-induced switching of a fraction of particles between a fluorescent and a non-fluorescent state, or
      • a light-induced switching of a fraction of particles between fluorescent states that are different with respect to their fluorescence emission wavelength,
      and

   - a fluorescence image recording step carried out after or interleaved with said fluorescence properties changing step, in which said fluorescence image is recorded,

   wherein both of said fluorescence properties changing step and said fluorescence image recording step are carried out in a pixel-wise scanning process using a laser scanning microscope according to a predetermined scan pattern, said scanning process corresponding to one image frame and
   wherein the particle mobility is assessed accounting for translocations of particles with changed fluorescence properties that occurred during said scanning process.

2. The method of claim 1, wherein said fluorescence image recording step is a step in which a pixelized fluorescence image is obtained in a pixel-wise scanning process, wherein a pixel in the fluorescence image represents the fluorescence of a volume element of the scanned sample that is illuminated by the laser beam of said laser scanning microscope and wherein individual locations of the scanned sample correspond to pixels of said pixel-wise scan.

3. The method of claim 1, wherein the scanning process is further **characterized by** the following:

   - the fluorescence image acquisition of at least some non-changed pixels is interleaved in time with the light-induced change of fluorescence properties of other pixels within the same scanning process.

4. The method of one of the preceding claims, wherein the particle mobility is assessed based on an analysis of the time-evolution of the fluorescence intensity profile accounting for time delays between scanning of individual pixels or groups of pixels within the same scanning process.

5. The method of one of the preceding claims, wherein said particle mobility is assessed based on one or more of the following:

(i) time correlations between fluorescence intensities of pixels within the same scan, in particular within the bleach frame,

(ii) time correlations between fluorescence intensities of pixels of different images or image frames, thereby at least approximately accounting for the time at which the respective pixel was scanned within the corresponding image or image frame, wherein the different images or image frames may in particular be

- images of the same part of the sample taken at different times, or
- images taken from spatially separated locations, in particular different focusing planes within the same sample.

6. The method of one of the preceding claims, wherein assessing the particle mobility comprises one or more of the following:

- determining one or more particle diffusion coefficients,
- determining one or more kinetic rate constants for the binding or dissociation of the particle,
- a quantitative assessment of the fraction of particles that is immobilized on the time scale of the measurement, and
- determining spatial constraints affecting particle mobility.

7. The method claim 6, wherein the spatial constraint is accounted for by an anomaly exponent of a diffusion process.

8. The method of one of the preceding claims, wherein the assessment of particle mobility is based on a comparison of pixel fluorescence intensities with model data, said model data accounting for the inherent time structure of the scanning process with respect to time delays between scanning of individual pixels or groups of pixels within the same scanning process, wherein said model data are preferably empirical model data or data obtained by simulation or model calculations.

9. The method of one of the preceding claims, wherein the assessment of mobility is based on a model of a particle translocation process, said model accounting for the probability that a particle changed with regard to its fluorescence properties, in particular bleached at a first point in time at a first pixel location has moved to a second pixel location at a second point in time, wherein preferably the time difference between the first and second points in time corresponds to or accounts for the time delay between scanning the first and second pixels in the scanning process, and/or wherein said translocation process is preferably a reaction-diffusion process and the movement of said particle between said first and second pixel locations is a diffusion-movement, or a diffusion-movement that may be interrupted by binding events.

10. The method of claim 9, wherein the probability that a particle bleached at a first point in time at a first pixel location has moved to a second pixel location at a second point in time is based on a predetermined probability propagator, said probability propagator accounting for one or more of the following

- particle diffusion
- particle binding interactions
- spatial constraints
- directed motion.

11. A computer program product which when executed on a processor carries out a method according to one of claims 1 to 10.

12. A computer readable medium storing a computer program product according to claim 11.

13. A system for determining the mobility of fluorescent particles or particles tagged with a fluorescent marker based on at least one pixelized fluorescent image, said system comprising:

- means for receiving said at least one fluorescent image that has been obtained in a process comprising

- a fluorescence properties changing step of locally irradiating the sample such as to carry out a local light-induced change of the fluorescence properties of the fluorescent particles, said light-induced change comprising one of the following:

• a photobleaching,
• a light-induced activation of fluorescence in a fraction of particles that are initially non-fluorescent,
• a light-induced switching of a fraction of particles between a fluorescent and a non-fluorescent state, or
• a light-induced switching of a fraction of particles between fluorescent states that are different with respect to their fluorescence emission wavelength,
and

- a fluorescence image recording step carried out after or interleaved with said fluorescence properties changing step, in which said fluorescence image is recorded, wherein both of said fluorescence properties changing step and said fluorescence image recording step are carried out in a pixel-wise scanning process using a laser scanning microscope according to a predetermined scan pattern, said scanning process corresponding to one image frame, said system further comprising means for assessing, from said at least one fluorescence image, the particle mobility based on translocations of particles that have been changed with regard to their fluorescence properties, in particular bleached particles that occur during the scanning process.

14. The system of claim 13, further adapted to carry out a method according to one of claims 1 to 10.

15. The system of claim 13 or 14, wherein said system is formed by a computer or workstation equipped with a computer program product of claim 11.

## Patentansprüche

1. Verfahren zum Ermitteln der Mobilität von fluoreszierenden Partikeln, oder Partikeln, die mit einem fluoreszierenden Marker versehen sind, basierend auf mindestens einem Fluoreszenzbild einer Probe,
wobei das mindestens eine Fluoreszenzbild in einem Prozess erzeugt wird, der Folgendes umfasst:

- einen Fluoreszenzeigenschaften-Änderungsschritt, in dem die Probe lokal bestrahlt wird, so dass eine lokale, lichtinduzierte Änderung der Fluoreszenzeigenschaften der Fluoreszenzpartikel durchgeführt wird, wobei die lichtinduzierte Änderung einen der folgenden Vorgänge umfasst:

• ein Fotobleichen (photobleaching),
• eine lichtinduzierte Aktivierung von Fluoreszenz in einem Teil der Partikel, die ursprünglich nicht fluoreszent sind,
• eine lichtinduzierte Umschaltung eines Anteils der Partikel zwischen einem fluoreszierenden und einem nicht fluoreszierendem Zustand, oder
• ein lichtinduziertes Umschalten eines Anteils der Partikel zwischen fluoreszenten Zuständen, die sich in Bezug auf ihre Fluoreszenzemissionswellenlänge unterscheiden, und

- einen Fluoreszenzbild-Atrfzeichnungsschritt, der nach dem Fluoreszenzeigenschaften-Änderungsschritt oder mit diesem verschachtelt ausgeführt wird, in dem das Fluoreszenzbild aufgezeichnet wird,

wobei sowohl der Fluoreszenzeigenschaften-Änderungsschritt als auch der Fluoreszenzbild-Aufzeichnungsschritt in einem pixelweisen Scanprozess unter Verwendung eines Laserscanningmikroskops gemäß einem vorbestimmten Scanmuster ausgeführt werden, wobei der Scanprozess einem Bildrahmen (image frame) entspricht, und
wobei die Partikelmobilität beurteilt wird, indem Translokalisierungen von Partikeln mit geänderten Fluoreszenzeigenschaften berücksichtigt werden, die während des Scanprozesses aufgetreten sind.

2. Verfahren nach Anspruch 1, wobei der Fluoreszenzbild-Aufzeichnungsschritt ein Schritt ist, in dem ein gepixeltes Fluoreszenzbild in einem pixelweisen Scanprozess erhalten wird,
wobei ein Pixel in dem Fluoreszenzbild die Fluoreszenz eines Volumenelements der gescannten Probe repräsentiert, die durch den Laserstrahl des Laserscanningmikroskops beleuchtet wird, und wobei individuelle Orte der gescannten Probe Pixeln des pixelweisen Scans entsprechen.

3. Verfahren nach Anspruch 1, wobei der Scanprozess ferner durch Folgendes gekennzeichnet ist:

- die Aufnahme des Fluoreszenzbildes von mindestens einigen nicht geänderten Pixeln ist zeitlich verschachtelt mit der lichtinduzierten Änderung der Fluoreszenzeigenschaften von anderen Pixeln innerhalb desselben Scanprozesses.

4. Verfahren nach einem der vorhergehenden Ansprüche, wobei die Partikelmobilität basierend auf einer Analyse der Zeitentwicklung des Fluoreszenz-Intensitätsprofils beurteilt wird, unter Berücksichtigung von Zeitverzögerungen zwischen dem Scannen von individuellen Pixeln oder Gruppen von Pixeln innerhalb desselben Scanprozesses.

5. Verfahren nach einem der vorhergehenden Ansprüche, wobei die Partikelmobilität basierend auf einem der folgenden Merkmale beurteilt wird:

(i) Zeitkorrelationen zwischen Fluoreszenzintensitäten von Pixeln innerhalb desselben Scans, insbesondere innerhalb des Bleichungsrahmens (bleach frame),
(ii) Zeitkorrelationen zwischen Fluoreszenzintensitäten von Pixeln aus unterschiedlichen Bildern oder Bildrahmen (image frames), wodurch zumindest näherungsweise die Zeit berücksichtigt wird, zu der der zugehörige Pixel innerhalb des zugehörigen Bildes oder Bildrahmens gescannt wurde, wobei die unterschiedlichen Bilder oder Bildrahmen insbesondere

- Bilder desselben Teils der Probe sein können, die zu unterschiedlichen Zeiten aufgenommen wurden, oder
- Bilder sein können, die von räumlich getrennten Orten aufgenommen wurden, insbesondere von unterschiedlichen Fokussierungsebenen innerhalb derselben Probe.

6. Verfahren nach einem der vorhergehenden Ansprüche, wobei das Beurteilen der Partikelmobilität einen oder mehrere der folgenden Vorgänge umfasst:

- Ermitteln eines oder mehrerer Partikel-Diffusionskoeffizienten,
- Ermitteln einer oder mehrerer kinetischen Ratenkonstanten für die Bindung oder Dissoziation des Partikels,
- eine quantitative Beurteilung des Anteils von Partikeln, der auf der Zeitskala der Messung immobilisiert ist, und
- Ermitteln räumlicher Beschränkungen, die die Partikelmobilität beeinflussen.

7. Verfahren nach Anspruch 6, wobei die räumliche Beschränkung durch einen Anomalieexponenten eines Diffusionsprozesses berücksichtigt wird.

8. Verfahren nach einem der vorhergehenden Ansprüche, wobei die Beurteilung der Partikelmobilität auf einem Vergleich von Pixelfluoreszenzintensität mit Modelldaten basiert, wobei die Modelldaten die inherente Zeitstruktur des Scanprozesses im Bezug auf Zeitverzögerung zwischen dem Scannen von individuellen Pixeln oder Pixelgruppen innerhalb desselben Scanprozesses berücksichtigen, wobei die Modelldaten vorzugsweise empirische Modelldaten sind, oder Daten sind, die durch Simulation oder Modellrechnungen erhalten wurden.

9. Verfahren nach einem der vorhergehenden Ansprüche, wobei die Beurteilung der Mobilität auf einem Modell eines Partikel-Translokationsprozesses basiert, wobei das Modell die Wahrscheinlichkeit berücksichtigt, dass sich ein Partikel, welches sich in Bezug auf seine Fluoreszenzeigenschaften zu einem ersten Zeitpunkt an einem ersten Pixelort geändert hat, insbesondere gebleicht wurde, zu einem zweiten Pixelort zu einem zweiten Zeitpunkt bewegt hat, wobei der Zeitunterschied zwischen dem ersten und dem zweiten Zeitpunkt vorzugsweise der Zeitverzögerung zwischen dem Scannen des ersten und des zweiten Pixels in dem Scanprozess entspricht, oder diesen berücksichtigt, und/oder wobei der Translokationsprozess vorzugsweise ein Reaktions-Diffusionsprozess ist und die Bewegung der Partikel zwischen dem ersten und dem zweiten Pixelort eine Diffusionsbewegung ist, oder eine Diffusionsbewegung, die durch Bindungsereignisse unterbrochen werden kann.

10. Verfahren nach Anspruch 9, wobei die Wahrscheinlichkeit, dass ein Partikel, welches zu einem ersten Zeitpunkt an einem ersten Pixelort gebleicht wurde, sich zu einem zweiten Zeitpunkt an einen zweiten Pixelort bewegt hat, auf einem vorbestimmten Wahrscheinlichkeitspropagator basiert, wobei der Wahrscheinlichkeitspropagator eines oder mehrere der folgenden berücksichtigt:

- Partikeldiffusion
- Partikelbindungswechselwirkungen
- räumliche Beschränkungen
- gerichtete Bewegung.

11. Computerprogrammprodukt, das, wenn es auf einem Prozessor ausgeführt wird, ein Verfahren nach einem der Ansprüche 1 bis 10 ausführt.

12. Computerlesbares Medium, welches ein Computerprogrammprodukt nach Anspruch 11 speichert.

13. System zum Ermitteln der Mobilität von Fluoreszenzpartikeln oder Partikeln, die mit einem Fluoreszenzmarker versehen sind, basierend auf mindestens einem gepixelten Fluoreszenzbild, wobei das System Folgendes umfasst:

Mittel zum Empfangen des mindestens einen Fluoreszenzbildes, welches in einem Prozess aufgenommen wurde, der Folgendes umfasst:

- einen Fluoreszenzeigenschaften-Änderungsschritt, in dem die Probe lokal bestrahlt wird, so dass eine lokale, lichtinduzierte Änderung der Fluoreszenzeigenschaften der Fluoreszenzpartikel durchgeführt wird, wobei die lichtinduzierte Änderung einen der folgenden Vorgänge umfasst:

• ein Fotobleichen (photobleaching),
• eine lichtinduzierte Aktivierung von Fluoreszenz in einem Teil der Partikel, die ursprünglich nicht fluoreszent sind,
• eine lichtinduzierte Umschaltung eines Anteils der Partikel zwischen einem fluoreszierenden und einem nicht fluoreszierendem Zustand, oder
• ein lichtinduziertes Umschalten eines Anteils der Partikel zwischen fluoreszenten Zuständen, die sich im Bezug auf ihre Fluoreszenzemissionswellenlänge unterscheiden, und

- einen Fluoreszenzbild-Aufzeichnungsschritt, der nach dem Fluoreszenzeigenschaften-Änderungsschritt oder mit diesem verschachtelt ausgeführt wird, in dem das Fluoreszenzbild aufgezeichnet wird,

wobei sowohl der Fluoreszenzeigenschaften-Änderungsschritt als auch der Fluoreszenzbild-Aufzeichnungsschritt in einem pixelweisen Scanprozess ausgeführt werden, unter Verwendung eines Laserscanningmikroskops gemäß einem vorbestimmten Scanmuster, wobei der Scanprozess einem Bildrahmen (image frame) entspricht, und wobei das System ferner Mittel zum Beurteilen der Partikelmobilität ausgehend von dem mindestens einen Fluoreszenzbild umfasst, wobei die Beurteilung auf Translokalisierungen von Partikeln, die im Hinblick auf ihre Fluoreszenzeigenschaften geändert wurden, insbesondere von gebleichten Partikeln, basiert, die während des Scanprozesses auftreten.

14. System nach Anspruch 13, das ferner dazu geeignet ist, ein Verfahren nach einem der Ansprüche 1 bis 10 auszuführen.

15. System nach Anspruch 13 oder 14, wobei das System durch einen Computer oder eine Workstation gebildet wird, der bzw. die mit einem Computerprogrammprodukt von Anspruch 11 ausgestattet ist.

**Revendications**

1. Procédé pour déterminer la mobilité de particules fluorescentes ou de particules marquées avec un marqueur fluorescent, sur la base d'au moins une image de fluorescence d'un échantillon, ladite au moins une image de fluorescence étant générée dans un processus comprenant

- une étape de changement de propriétés de fluorescence consistant à irradier localement l'échantillon de manière à effectuer un changement local induit par la lumière des propriétés de fluorescence des particules fluorescentes, ledit changement induit par la lumière comprenant l'un de ce qui suit :

. un photoblanchiment,
. une activation induite par la lumière de la fluorescence dans une fraction de particules qui sont initialement non fluorescentes,
. une commutation induite par la lumière d'une fraction de particules entre un état fluorescent et un état non fluorescent, ou
. une commutation induite par la lumière d'une fraction de particules entre les états fluorescents qui sont différents en relation avec leur longueur d'onde d'émission de fluorescence,
et

- une étape d'enregistrement d'image de fluorescence effectuée après ou entrelacée avec ladite étape de changement de propriétés de fluorescence, au cours de laquelle ladite image de fluorescence est enregistrée,

dans lequel ladite étape de changement de propriétés de fluorescence et ladite étape d'enregistrement d'image de fluorescence sont toutes deux effectuées dans un processus de balayage au niveau du pixel en utilisant un microscope à balayage laser conformément à un motif de balayage prédéterminé, ledit processus de balayage correspondant à une trame d'image et
dans lequel la mobilité des particules est estimée en représentant les translocations des particules avec des propriétés de fluorescence changées qui se sont produites pendant ledit processus de balayage.

2. Procédé selon la revendication 1, dans lequel ladite étape d'enregistrement d'image de fluorescence est une étape au cours de laquelle une image de fluorescence pixélisée est obtenue dans un processus de balayage au niveau du pixel, dans lequel un pixel dans l'image de fluorescence représente la fluorescence d'un élément de volume de l'échantillon balayé qui est irradié par le faisceau laser dudit microscope à balayage laser, et dans lequel les emplacements individuels de l'échantillon balayé correspondent aux pixels dudit balayage au niveau du pixel.

3. Procédé selon la revendication 1, dans lequel le processus de balayage est **caractérisé en outre par** ce qui suit

- l'acquisition d'une image de fluorescence d'au moins certains pixels non changés est entrelacée dans le temps avec le changement induit par la lumière des propriétés de fluorescence des autres pixels dans le même processus de balayage.

4. Procédé selon l'une des revendications précédentes,
dans lequel la mobilité des particules est estimée sur la base d'une analyse de l'évolution dans le temps du profil d'intensité de fluorescence représentant les retards entre les balayages de pixels individuels ou de groupes de pixels dans le même processus de balayage.

5. Procédé selon l'une des revendications précédentes,
dans lequel ladite mobilité des particules est estimée sur la base d'une ou de plusieurs de ce qui suit :

(i) de corrélations dans le temps entre les intensités de fluorescence des pixels dans le même balayage, en particulier dans la trame de blanchiment,
(ii) de corrélations dans le temps entre les intensités de fluorescence des pixels de différentes images ou trames d'image, représentant de ce fait au moins approximativement l'instant auquel le pixel respectif a été balayé dans l'image ou la trame d'image correspondante, dans lequel les différentes images ou trames d'image peuvent être en particulier

- des images de la même partie de l'échantillon prises à différents instants, ou
- des images prises à partir d'emplacements séparés spatialement, en particulier différents plans de focalisation dans le même échantillon.

6. Procédé selon l'une des revendications précédentes,
dans lequel l'estimation de la mobilité des particules comprend une ou plusieurs de ce qui suit :

- la détermination d'un ou de plusieurs coefficients de diffusion de particule,
- la détermination d'une ou de plusieurs constantes cinétiques pour la liaison ou la dissociation de la particule,
- une estimation quantitative de la fraction des particules qui est immobilisée sur l'échelle de temps de la mesure, et
- la détermination des contraintes spatiales affectant la mobilité des particules.

7. Procédé selon la revendication 6, dans lequel la contrainte spatiale est représentée par un exposant d'anomalie d'un processus de diffusion.

8. Procédé selon l'une des revendications précédentes,
dans lequel l'estimation de la mobilité des particules est basée sur une comparaison des intensités de fluorescence de pixel avec des données de modèle, lesdites données de modèle représentant la structure temporelle inhérente du processus de balayage par rapport aux retards temporels entre le balayage de pixels individuels ou de groupes de pixels dans le même processus de balayage, dans lequel lesdites données de modèle sont de préférence des données de modèle empiriques ou des données obtenues par simulation ou des calculs de modèle.

9. Procédé selon l'une des revendications précédentes,
dans lequel l'estimation de la mobilité est basée sur un modèle d'un processus de translocation de particules, ledit modèle représentant la probabilité qu'une particule ait changé en ce qui concerne ses propriétés de fluorescence, en particulier blanchie à un premier instant à un premier emplacement de pixel se soit déplacée à un deuxième emplacement de pixel à un deuxième instant, dans lequel, de préférence, la différence de temps entre les premier et deuxième instants correspond au ou représente le retard entre les balayages des premier et deuxième pixels dans le processus de balayage, et/ou dans lequel ledit processus de translocation est de préférence un processus de réaction-diffusion et le mouvement de ladite particule entre lesdits premier et deuxième emplacements de pixel est un mouvement de diffusion, ou un mouvement de diffusion qui peut être interrompu par des événements de liaison.

10. Procédé selon la revendication 9, dans lequel la probabilité qu'une particule blanchie à un premier instant à un premier emplacement de pixel se soit déplacée à un deuxième emplacement de pixel à un deuxième instant est basée sur un propagateur de probabilité prédéterminé, ledit propagateur de probabilité représentant un ou plusieurs de ce qui suit

- une diffusion de particule
- des interactions de liaison de particules
- des contraintes spatiales
- un mouvement dirigé.

11. Produit-programme d'ordinateur qui, lorsqu'il est exécuté sur un processeur, effectue un procédé selon l'une des revendications 1 à 10.

12. Support pouvant être lu par un ordinateur mémorisant un produit-programme d'ordinateur selon la revendication 11.

13. Système pour déterminer la mobilité de particules fluorescentes ou de particules marquées avec un marqueur fluorescent sur la base au moins d'une image fluorescente pixélisée, ledit système comprenant :

- des moyens pour recevoir ladite au moins une image fluorescente qui a été obtenue dans un processus comprenant
- une étape de changement de propriétés de fluorescence consistant à irradier localement l'échantillon de manière à effectuer un changement local induit par la lumière des propriétés de fluorescence des particules fluorescentes, ledit changement induit par la lumière comprenant l'un de ce qui suit :

. un photoblanchiment,
. une activation induite par la lumière de la fluorescence dans une fraction de particules qui sont initialement non fluorescentes,
. une commutation induite par la lumière d'une fraction de particules entre un état fluorescent et un état non fluorescent, ou
. une commutation induite par la lumière d'une fraction de particules entre les états fluorescents qui sont différents en relation avec leur longueur d'onde d'émission de fluorescence,
et

- une étape d'enregistrement d'image de fluorescence effectuée après ou entrelacée avec ladite étape de changement de propriétés de fluorescence, au cours de laquelle ladite image de fluorescence est enregistrée,

dans lequel ladite étape de changement de propriétés de fluorescence et ladite étape d'enregistrement d'image de fluorescence sont toutes deux effectuées dans un processus de balayage au niveau du pixel en utilisant un microscope à balayage laser conformément à un motif de balayage prédéterminé, ledit processus de balayage correspondant à une trame d'image, ledit système comprenant en outre des moyens pour estimer, à partir de ladite au moins une image de fluorescence, la mobilité des particules sur la base des translocations des particules qui ont été changées en ce qui concerne leurs propriétés de fluorescence, en particulier des particules blanchies qui apparaissent pendant le processus de balayage.

14. Système selon la revendication 13, conçu en outre pour effectuer un procédé selon l'une des revendications 1 à 10.

15. Système selon la revendication 13 ou 14, dans lequel ledit système est formé par un ordinateur ou une station de travail équipé d'un produit-programme d'ordinateur de la revendication 11.

**Fig. 1**

Fig. 2

Snf2H-GFP      RFP      Horizontal profile

g: green, Snf2H-GFP
r: red, RFP

**Fig. 3**

$D = 0.1\ \mu m^2/s$    $D = 1\ \mu m^2/s$    $D = 10\ \mu m^2/s$

1400 Hz

100 Hz

1400 Hz

100 Hz

Fig. 4

Fig. 5

**Fig. 6**

EP 2 776 813 B1

Fig. 7

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERDEL F. ; MÜLLER-OTT, K. ; BAUM, M. ; WACHSMUTH, M. ; RIPPE, K.** Dissecting chromatin interactions in living cells from protein mobility maps. *Chromosome Res.,* 2011, vol. 19, 99-115
- **HEBERT, B. ; COSTANTINO, S. ; WISEMAN, P. W.** Spatiotemporal image correlation spectroscopy (STICS) theory, versification, and application to protein velocity mapping in living CHO cells. *Biophys. J.,* 2005, vol. 88, 3601-3614
- **DIGMAN, M.A. et al.** Fluctuation correlation spectroscopy with a laser-scanning microscope: exploiting the hidden time structure. *Biophys. J.,* 2005, vol. 88, L33-36
- **SOUMPASIS, D.M.** Theoretical analysis offluorescence photobleaching recovery experiments. *Biophys. J.,* 1983, vol. 41, 95-97
- **SPRAGUE, B.L. ; PEGO, R.L. ; STAVREVA, D.A. ; MCNALLY, J.G.** Analysis of binding reactions by fluorescence recovery after photobleaching. *Biophys. J.,* 2004, vol. 86, 3473-3495

- **ERDEL, F. ; SCHUBERT, T. ; MARTH, C. ; LANGST, G. ; RIPPE, K.** Human ISWI chromatin-remodeling complexes sample nucleosomes via transient binding reactions and become immobilized at active sites. *Proc. Natl. Acad. Sci. USA,* 2010, vol. 107, 19873-19878
- **PACK, C. ; SAITO, K. ; TAMURA, M. ; KINJO, M.** Microenvironment and effect of energy depletion in the nucleus analyzed by mobility of multiple oligomeric EGFPs. *Biophys. J.,* 2006, vol. 91, 3921-3936
- **HENDRIX, J. ; FLORS, C. ; DEDECKER, P. ; HOFKENS, J. ; ENGELBORGHS, Y.** Dark states in monomeric red fluorescent proteins studied by fluorescence correlation and single molecule spectroscopy. *Biophys J94,* 2008, 4103-4113
- **WEISS, M.** Challenges and artifacts in quantitative photobleaching experiments. *Traffic5,* 2004, 662-671
- **KANG, M. ; DAY, C.A. ; DRAKE, K. ; KENWORTHY, A.K. ; DIBENEDETTO, E. A.** generalization of theory for two-dimensional fluorescence recovery after photobleaching applicable to confocal laser scanning microscopes. *Biophys. J.,* 2009, vol. 97, 1501-1511